# FASCICULE DE BREVET EUROPEEN

(11) **EP 1 664 906 B1**
(45) Date de publication et mention de la délivrance du brevet: **21.09.2011**
(21) Numéro de dépôt: 04787450.8
(22) Date de dépôt: 24.09.2004
(51) Int. Cl.: G02C 7/00, G02B 1/10

(54) **LENTILLE OPHTALMIQUE RECOUVERTE D'UN FILM ELECTROSTATIQUE ET PROCEDE DE DEBORDAGE D'UNE TELLE LENTILLE**
BRILLENLINSE MIT BESCHICHTUNG MIT EINEM ELEKTROSTATISCHEN FILM UND EDGING-VERFAHREN FÜR EINE SOLCHE LINSE
OPHTHALMIC LENS WHICH IS COATED WITH AN ELECTROSTATIC FILM AND METHOD OF EDGING ONE SUCH LENS

(30) Priorité: 26.09.2003 FR 0311351; 14.01.2004 FR 0450082
(43) Date de publication de la demande: 07.06.2006
(73) Titulaire: ESSILOR INTERNATIONAL COMPAGNIE GENERALE D'OPTIQUE, 94227 Charenton Cédex (FR)
(72) Inventeur: LACAN, Pascale, F-75011 Paris (FR); CONTE, Dominique, F-52100 Saint-Dizier (FR)
(74) Mandataire: Catherine, Alain
(86) Numéro de dépôt international: PCT/FR2004/002426
(87) Numéro de publication internationale: WO 2005/031441

(56) Documents cités:
- WO-A-03/057641
- US-A- 5 792 537

## Description

La présente invention concerne de manière générale une lentille otique, notamment une lentille ophtalmique, dont une face principale comporte un revêtement temporaire de protection, lui-même revêtu d'un film électrostatique pelable.

Une lentille optique, notamment une lentille ophtalmique résulte d'une succession d'opérations de moulage et/ou de surfaçage / polissage qui déterminent la géométrie des deux surfaces optiques convexe et concave de la lentille, puis de traitements de surface appropriés.

La dernière étape de finition d'une lentille ophtalmique est l'opération de débordage qui consiste à usiner la tranche ou la périphérie de la lentille de façon à la conformer aux dimensions requises pour adapter la lentille à la monture de lunette dans laquelle elle est destinée à prendre place.

Le débordage est réalisé généralement sur une meuleuse comprenant des meules diamantées qui effectuent l'usinage tel que défini ci-dessus.

La lentille est maintenue, lors de cette opération, par des organes de blocage intervenant axialement.

Le mouvement relatif du verre par rapport à la meule est contrôlé, généralement numériquement, afin de réaliser la forme souhaitée.

Comme cela apparaît, il est tout à fait impératif que la lentille soit fermement maintenue lors de ce mouvement.

Pour cela, avant l'opération de débordage, on effectue une opération de glantage de la lentille, c'est à dire que l'on vient positionner sur la surface convexe de la lentille un moyen de maintien ou gland.

Un patin de maintien, tel qu'une pastille autocollante, par exemple un adhésif double face, est disposé entre le gland et la surface convexe de la lentille.

La lentille ainsi équipée est positionnée sur l'un des organes axiaux de blocage précités, le second organe de blocage, axial venant alors serrer la lentille sur sa face concave par l'intermédiaire d'une butée, généralement en élastomère.

Lors de l'usinage, un effort de couple tangentiel est généré sur la lentille, ce qui peut engendrer une rotation de la lentille par rapport au gland si le système de maintien de la lentille n'est pas assez efficace.

Le bon maintien de la lentille dépend principalement de la bonne adhérence à l'interface patin de maintien/ surface convexe de la lentille.

Les lentilles ophtalmiques de dernière génération comportent le plus souvent une couche extérieure organique ou minérale qui modifie l'énergie de surface, par exemple des revêtements hydrophobes et/ou oléophobes antisalissures.

Il s'agit le plus souvent de matériaux de type fluorosilane qui diminuent l'énergie de surface afin d'éviter l'adhérence de souillures grasses qu'il est ainsi plus facile d'éliminer.

Ce type de revêtement de surface peut être d'une efficacité telle que l'adhérence à l'interface patin/surface convexe peut s'en trouver altérée, ce qui rend difficile des opérations de débordage satisfaisantes, en particulier pour des lentilles en polycarbonate dont le débordage génère des efforts beaucoup plus importants que pour les autres matières.

La conséquence d'une opération de débordage mal menée est la perte pure et simple de la lentille.

C'est pourquoi il est avantageux de déposer sur la couche extérieure une couche protectrice temporaire de préférence, conférant une énergie de surface au moins égale à 15 mJ/m², notamment une couche de fluorures, oxydes, hydroxydes métalliques, en particulier une couche protectrice de MgF₂, tel que cela est décrit dans la demande de brevet français n° 0106534 ou WO 03/057641, ou encore d'une encre de marquage ou d'une résine constituant le liant de ces encres de marquages.

Les lentilles optiques, notamment ophtalmiques, comprenant le cas échéant un ou plusieurs revêtements fonctionnels classiques tels qu'un revêtement de primaire favorisant l'adhésion d'autres couches fonctionnelles, un revêtement anti-abrasion et un revêtement anti-reflet, et comportant un revêtement de surface hydrophobe et/ou oléophobe, notamment anti-salissure, lui-même recouvert au moins partiellement par un revêtement temporaire de protection notamment favorisant l'opération de débordage, sont chacune stockées et distribuées dans des pochettes en papier pourvues intérieurement d'un revêtement de protection. Les pochettes contenant chacune une lentille peuvent être empilées les unes sur les autres lors du stockage ou de l'expédition.

On a constaté que du fait de frottements, ou même de simples pressions, lors du stockage ou de la manipulation de ces lentilles, y compris dans leurs pochettes respectives, il apparaissait une dégradation du revêtement temporaire de protection, notamment des revêtements comportant une couche externe en fluorure métallique et tout particulièrement en MgF₂, pouvant aller jusqu'à une perte d'adhérence avec le patin de maintien lors de l'opération de débordage. Cette dégradation peut s'apprécier visuellement, notamment dans le cas d'une couche externe de MgF₂, par l'apparition sur la couche externe de protection temporaire de marbrures visibles à l'oeil nu.

Le brevet américain 5,792,537 décrit la protection de marques effaçables imprimées sur la surface d'une lentille optique durant l'opération de meulage de cette lentille par masquage des marques au moyen d'un ruban adhésif. Le ruban adhésif peut être un film, électrostatique tel qu'un film vinylique fortement plastifié.

La présente invention a donc pour objet de fournir une lentille optique, notamment ophtalmique, comportant un revêtement protecteur externe, dégradable mécaniquement par frottement et /ou contact qui est protégé contre une telle dégradation, notamment lors du stockage et/ou de la manipulation de la lentille.

Selon l'invention, la lentille optique comporte les caractéristiques de la revendication 1.

Selon un mode de réalisation préféré de l'invention, la couche extérieure est en un matériau choisi parmi les fluorures métalliques et leurs mélanges, les oxydes métalliques et leurs mélanges, les hydroxydes métalliques et leurs mélanges, les mélanges de deux ou plus de ces fluorures, oxydes et hydroxydes métalliques, les encres de marquage de lentilles optiques et les résines constituant le liant de ces encres de marquage.

De préférence encore, la couche extérieure du revêtement protecteur externe, temporaire est constituée d'un fluorure métallique, d'un oxyde métallique ou d'un hydroxyde métallique.

Dans la présente demande, le terme " lentille " désigne une lentille en verre organique ou minéral, traitée ou non, selon qu'elle comporte un ou plusieurs revêtements de nature diverse ou qu'elle reste nue.

Lorsque la lentille comporte un ou plusieurs revêtement(s) de surface, l'expression " déposer une couche sur la lentille signifie que l'on dépose une couche sur le revêtement extérieur de la lentille.

Les énergies de surface sont calculées selon la méthode Owens-Wendt décrite dans la référence suivante : " Estimation of the surface force energy of polymers " Owens D.K., Wendt R.G. (1969) J. APPL. POLYM. SCI,13,1741-1747.

Les lentille optiques de l'invention comportent en général un revêtement de surface hydrophobe et/ou oléophobe et préférentiellement comportent à la fois un revêtement de surface hydrophobe et/ou oléophobe déposé sur un revêtement anti-reflets mono ou multicouche.

En effet, les revêtements hydrophobes et/ou oléophobes sont généralement appliqués sur des lentilles comportant un revêtement anti-reflets, en particulier en matière minérale, afin de réduire leur tendance marquée à la salissure, par exemple vis à vis des dépôts graisseux.

Comme indiqué précédemment, les revêtements hydrophobes et/ou oléophobes sont obtenus par application, généralement sur la surface du revêtement anti-reflets, de composés diminuant l'énergie de surface de la lentille.

De tels composés ont été largement décrits dans l'art antérieur, par exemple dans les brevets US-4410563, EP-0203730, EP-749021, EP-844265, EP-933377.

Des composés à base de silanes porteurs de groupements fluorés, en particulier de groupement(s) perfluorocarbone ou perfluoropolyéther, sont le plus souvent utilisés.

A titre d'exemples, on peut citer des composés de silazane, de polysilazane ou de silicone comprenant un ou plusieurs groupements fluorés tels que ceux cités précédemment.

Un procédé connu consiste à déposer sur le revêtement anti-reflets des composés porteurs de groupements fluorés et de groupements Si-R , R représentant un groupe -OH ou un précurseur de celui-ci, préférentiellement un groupe alcoxy. De tels composés peuvent effectuer, à la surface du revêtement anti-reflets, directement ou après hydrolyse, des réactions de polymérisation et/ou réticulation.

L'application des composés diminuant l'énergie de surface du verre est classiquement effectuée par trempé dans une solution dudit composé, par centrifugation ou par dépôt en phase vapeur, notamment. Généralement, le revêtement hydrophobe et/ou oléophobe a une épaisseur inférieure à 10 nm, et mieux encore inférieure à 5 nm.

L'invention est mise en oeuvre préférentiellement sur des lentilles comportant un revêtement de surface hydrophobe et/ou oléophobe conférant une énergie de surface inférieure à 14 mJoules/m² et mieux encore inférieure ou égale à 12 mJ/m².

Le revêtement protecteur temporaire élèvera généralement l'énergie de surface de la lentille jusqu'à une valeur d'au moins 15 mJoules/m².

Il peut être appliqué sur une zone couvrant la totalité d'au moins une des deux faces du verre ou uniquement sur la zone destinée à recevoir le contact du patin de maintien de la lentille.

Plus précisément, il est d'usage de déposer le patin de maintien, associé au gland, sur la face convexe de la lentille. On peut donc couvrir avec le revêtement protecteur la totalité de la face convexe ou, alternativement, uniquement une zone centrale de la face convexe, en utilisant un masque ou toute autre technique appropriée.

Le dépôt peut couvrir uniformément la zone correspondante, c'est à dire qu'il présente une structure continue, mais il peut aussi présenter une structure discontinue, par exemple prendre la forme d'une trame.

Dans ce cas, on forme un dépôt intermittent, dont la surface reste suffisante pour permettre l'adhérence requise du patin de maintien.

Les dépôts à structure discontinue peuvent être obtenus par tampographie.

Néanmoins, la zone couverte par le revêtement protecteur externe, temporaire (selon l'invention) doit être telle que la surface de contact entre le revêtement protecteur et le patin de maintien soit suffisante pour assurer l'adhésion de la lentille au patin.

Généralement, le revêtement temporaire de protection recouvre au moins 15 %, de préférence au moins 20 %, mieux au moins 30 %, mieux encore au moins 40%, et de préférence la totalité de la surface de la lentille sur laquelle on vient faire adhérer le patin, c'est-à-dire généralement la face convexe de la lentille.

A la suite du dépôt du revêtement protecteur externe, temporaire, on obtient une lentille apte au débordage.

C'est à dire qu'après débordage selon le procédé de l'invention, le verre présentera les dimensions requises pour convenablement s'insérer dans la monture qui lùi est destinée.

Plus précisément, ce résultat est obtenu lorsque le verre, lors de l'opération de débordage, subit un désaxage maximum de 2°.

Une aptitude au débordage optimale correspond à un verre dont le désaxage est inférieur ou égal à 1°.

Le revêtement protecteur externe, temporaire, peut être constitué de tout matériau permettant d'élever l'énergie de surface de la lentille à propriétés hydrophobe et/ou oléophobe et susceptible d'être éliminé lors d'une opération ultérieure subséquente à l'étape de débordage.

Bien évidemment, le matériau doit être tel qu'il n'altère pas définitivement les propriétés de surface du revêtement hydrophobe et/ou oléophobe et qu'après l'élimination de celui-ci , les propriétés optiques et de surface de la lentille sont globalement identiques à celles que la lentille possédait avant le dépôt du revêtement protecteur temporaire.

Préférentiellement, le revêtement protecteur externe, temporaire, comporte une couche extérieure minérale, et particulièrement un fluorure ou un mélange de fluorures métalliques, un oxyde ou un mélange d'oxydes métalliques ou un hydroxyde métallique ou un mélange d'hydroxydes métalliques ou encore un mélange de ces fluorures, oxydes et hydroxydes.

Comme exemple de fluorures, on peut citer le fluorure de magnésium MgF₂, de lanthane LaF₃, d'aluminium AlF₃ ou de cérium CeF₃.

Des oxydes utilisables sont les oxydes de magnésium (MgO), de calcium (CaO), de titane (TiO₂) d'aluminium (Al₂O₃), de zirconium (ZrO₂) ou de praséodyme (Pr₂O₃).

Des mélanges d'alumine et d'oxyde de praséodyme sont recommandés.

Un matériau commercial particulièrement recommandé est le PASO2 de la société Leybold.

Comme exemple d'hydroxydes métalliques, on peut citer Mg(OH)₂, Ca(OH)₂ et Al(OH)₃, de préférence Mg(OH)₂..

Le matériau particulièrement préféré est MgF₂.

La couche protectrice peut être déposée par tout procédé classique convenable.

Généralement, les revêtements anti-reflets, hydrophobe et/ou oléophobe ont été déposés par évaporation, dans des cloches à vide et il est souhaitable de déposer la couche protectrice temporaire par la même technique, ce qui permet d'effectuer l'ensemble des opérations à la suite, sans manipulation excessive des lentilles entre les étapes.

Lorsqu'il est constitué d'une matière minérale, l'épaisseur du revêtement protecteur est préférentiellement inférieure ou égale à 50 nm, et généralement de 1 à 50 nm, et mieux encore de 5 à 50 nm.

D'une manière générale, si l'épaisseur du revêtement protecteur est trop faible, on risque de modifier insuffisamment l'énergie de surface.

Si, au contraire, l'épaisseur du revêtement protecteur est trop élevée, en particulier pour les revêtements essentiellement minéraux, les inventeurs ont trouvé qu'il risque d'apparaître des contraintes mécaniques au sein du revêtement, ce qui peut être préjudiciable aux propriétés attendues.

De préférence, et tout particulièrement lorsque le revêtement protecteur est déposé sur la totalité d'une des faces de la lentille, le matériau présente un certain degré de transparence permettant d'effectuer sur la lentille des mesures classiques de puissance par un frontofocomètre.

Ainsi donc la lentille selon l'invention présente de préférence une transmission d'au moins 18 %, de préférence au moins 40% selon la norme ISO8980/3.

En alternative aux matériaux de nature minérale précédemment cités, on peut utiliser des encres classiques pour le marquage des verres ophtalmiques progressifs, et/ou les résines constituant le liant de ces encres.

Dans ce cas, il est possible de déposer des épaisseurs beaucoup plus élevées que dans le cas de revêtements purement minéraux.

Les épaisseurs requises peuvent alors varier de 5 à 150 micromètres.

Des résines de type alkyde sont particulièrement conseillées.

Comme indiqué précédemment, le revêtement protecteur externe, temporaire peut être monocouche ou multicouche, en particulier bicouches.

Les couches peuvent être toutes de nature minérale ou encore à la fois de nature minérale et organique. Dans ce dernier cas, de préférence la couche organique est déposée sur la couche minérale de faible épaisseur (5 à 200nm) et peut être d'épaisseur beaucoup plus élevée, typiquement de 0,2 à 10 µm.

Comme indiqué précédemment, le revêtement protecteur externe, temporaire, est mécaniquement dégradable par frottement et/ou contact. Par mécaniquement dégradable par frottement et/ou contact selon l'invention, on entend un revêtement qui est éliminé après avoir été soumis à un essuyage à sec consistant à effectuer 5 aller-retours sur la zone d'essuyage avec un tissu Wypall L40^{®} de la société KIMBERLY-CLARK, en maintenant une pression de 3 kg/cm².

L'invention est particulièrement utile pour recouvrir les revêtements protecteurs externes temporaires fragiles, c'est-a-dire qui sont éliminés après avoir été soumis à un essuyage à sec consistant à effectuer 5 aller-retours sur la zone d'essuyage avec le tissu Wypall précédemment cité en maintenant une pression de 60 g/cm².

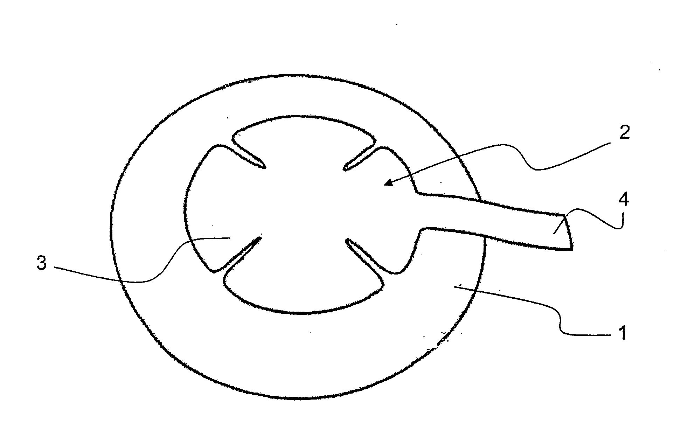

La suite de la description se réfère à la figure 1 qui représente une lentille ophtalmique pourvue d'un revêtement protecteur externe, temporaire et d'un film électrostatique pelable selon une réalisation de l'invention.

Selon l'invention le revêtement protecteur externe, temporaire, est recouvert par un film pelable adhérant électrostatiquement à la surface du revêtement (film électrostatique pelable).

Ces films électrostatiques pelables sont connus en eux-mêmes et sont des films souples en matière plastique, de préférence en poly(chlorure de vinyle) (PVC), ayant une teneur élevée en plastifiant, c'est-à-dire d'au moins 20% en poids, de préférence d'au moins 30 % en poids et typiquement de 30 à 60 % en poids.

Les films électrostatiques pelables selon l'invention ont une épaisseur variant généralement de 100 à 200 µm, typiquement de l'ordre de 150 µm.

Un film électrostatique pelable en PVC (épaisseur de 150 µm) contenant 36 % en poids de plastifiant est commercialisé par la société JAC sous la référence STICK 87015. Un autre film utilisable commercialisé par la même société est celui référencé sous le n°87215.

Ces films électrostatiques sont généralement sous forme de feuilles, format A4, dans lesquelles on peut découper la portion voulue pour assurer la protection du revêtement.

On, peut prévoir sur cette partie une languette de préhension s'étendant au-delà du bord de la lentille pour faciliter le pelage du film.

De façon surprenante, on a trouvé que de tels films de protection peuvent être ôtés de la surface de la lentille sans endommager le revêtement protecteur temporaire malgré l'extrême sensibilité de celui-ci aux dégradations par frottement et par contact, et tout particulièrement un revêtement temporaire de nature minérale, d'épaisseur égale ou inférieure à 50 nm, et en particulier dans le cas d'un revêtement en MgF₂.

En se référant à la figure 1, on a représenté une lentille ophtalmique 1, par exemple à base de CR39^{®} (copolymère de diéthyléneglycol bisallylcarbonate), dont la face convexe est revêtue d'un revêtement hydrophobe et/ou oléophobe (par exemple perfluoré) et d'un revêtement protecteur externe, temporaire (par exemple une couche de MgF₂).

Selon l'invention, la partie centrale du revêtement protecteur externe temporaire est recouverte par un film pelable électrostatique 2 comportant une partie principale 3 de forme générale circulaire et une languette de préhension 4 s'étendant depuis la circonférence de la partie centrale 3 au-delà du bord de la lentille 1.

Cette languette 4 permet de retirer facilement le film pelable 2 sans risque de détérioration du revêtement protecteur-externe, temporaire.

La lentille selon l'invention peut être soumise à une opération de débordage tout à fait classique, excepté qu'il faut effectuer, avant le débordage, le retrait du film électrostatique pelable et, en étape finale, une opération d'élimination du revêtement protecteur temporaire.

L'étape d'élimination du revêtement protecteur temporaire peut être effectuée soit en milieu liquide, soit par essuyage à sec, soit encore par une mise en oeuvre successive de ces deux moyens.

L'étape d'élimination en milieu liquide est de préférence effectuée par une solution d'eau savonneuse ou par un alcool tel que l'alcool isopropylique. Une solution acide peut également être utilisée, en particulier une solution d'acide orthophosphorique, à des molarités pouvant, varier de 0,01 à 1 N.

La solution acide peut également comprendre des agents tensioactifs, anioniques, cationiques, ou amphotères.

La température à laquelle est menée l'étape d'élimination est variable, mais généralement, on procède à température ambiante.

L'élimination de revêtement protecteur temporaire peut également être favorisée par action mécanique, préférentiellement par utilisation d'ultrasons.

Pour l'élimination par essuyage à sec on utilisera de préférence un tissu WYPALL 40^{®} commercialisé par la société Kimberly-Clark.

Après le traitement avec le milieu liquide tel que la solution acide, l'essuyage à sec ou la combinaison des deux, l'étape d'élimination peut comprendre une étape de nettoyage par une solution aqueuse de pH sensiblement égal à 7.

A la fin de l'étape d'élimination de la couche protectrice temporaire, la lentille présente des caractéristiques optiques et de surface du même ordre, voire quasiment identiques à celles de la lentille initiale, notamment comportant le revêtement hydrophobe et/ou oléophobe.

L'invention concerne également un procédé de débordage d'une lentille optique, notamment ophtalmique comprenant les étapes suivantes :
- prendre une lentille optique ;
- ôter le film pelable électrostatique pour mettre à nu la couche extérieure mécaniquement dégradable ;
- disposer la lentille optique dans un dispositif de débordage comportant un patin de maintien, de sorte que le patin de maintien adhère à la couche extérieure mécaniquement dégradable ;
- procéder au débordage de la lentille optique ;
- enlever le revêtement protecteur temporaire ; et
- récupérer la lentille optique finale débordée.

### Exemple 1

Les dépôts sont effectués sur des substrats qui sont des verres ophtalmiques Orma^{®} 15 Supra , à base de CR39®, puissance -2,00 dioptries, de diamètre 65 mm, comportant, sur leurs deux faces, un revêtement anti-abrasion de type polysiloxane.

### 1-1 Description du traitement des substrats

La machine de traitement sous vide utilisée est une machine Balzers BAK760 équipée d'un canon à électrons, et d'un canon à ions de type « End Hall » Mark2 Commonwealth et d'une source d'évaporation à effet Joule.

Les verres sont placés sur le carrousel, face concave exposée vers les sources d'évaporation et le canon à ions.

On effectue un pompage jusqu'à l'obtention d'un vide secondaire.

On active la surface des substrats en la bombardant par un faisceau d'ions argon à l'aide du canon à ions Mark 2.

Ensuite, après interruption du bombardement ionique, on procède à une évaporation successive, avec le canon à électrons, de 4 couches optiques anti-reflets haut indice de réfraction (HI), bas indice de réfraction (BI), haut indice de réfraction (HI), bas indice de réfraction (BI) : ZrO2/SiO2/ZrO2/SiO2.

On dépose une couche de revêtement hydrophobe et oléophobe par évaporation d'un produit de marque Optool DSX ( composé comprenant des motifs perfluoropropylène), commercialisé par la société DAIKIN.

L'épaisseur du revêtement hydrophobe et oléophobe obtenu est de 2 à 5 nm.

Finalement, on procède ensuite au dépôt par évaporation de la couche protectrice externe, temporaire.

Le matériau déposé est un composé de formule MgF₂, de granulométrie 1-2,5 mm, commercialisé par la Société Merck.

L'évaporation est effectuée au canon à électrons.

L'épaisseur physique déposée est de 20 nm, à une vitesse de dépôt de 0,5 nm/s.

Ensuite, on procède au réchauffage de l'enceinte et remise à l'atmosphère de la chambre de traitement.

Les verres sont alors retournés et leur face convexe orientée vers la zone de traitement. La face convexe est traitée de manière identique à la face concave (en reproduisant les étapes décrites ci-dessus).

La moitié des verres traités sont mis en pochette sans aucune protection.

| | |
|---|---|
| Référence des verres | : Orma 15 Supra, puissance -2.00 dioptries, |
| Diamètre | : 65 mm |
| Quantité | : 15 verres |
| Référence des pochettes | : Landouzy / Papier Fabrik Lahnstein |

### 1-1 Pose des films électrostatiques

Sur les 15 autres verres, on pose, manuellement, au centre de la surface convexe des verres, un film électrostatique de diamètre 38 mm avec languette comme représenté à la Figure 1.

Les verres sont ensuite mis dans des pochettes Landouzy / Papier Fabrik Lahnstein.

| | |
|---|---|
| Référence des verres | : Orma 15 Supra, -2,00 dioptries, |
| Diamètre | : 65 mm |
| Quantité | : 15 verres |
| Fournisseur des films électrostatiques | : Société Séricom - Plastorex, fabricant JAC. |
| Matière | : PVC |
| Epaisseur du film | : 150 µm |

### 1-3 Stockage des verres

Les 15 verres sans film et les 15 verres + film électrostatique, dans les pochettes, sont placées verticalement, par rangée de 30 verres (stockage standard) dans des boites en carton et sont stockés pendant 4 mois, dans un local non régulé ni en hygrométrie, ni en température.

La pression substrat / pochette est d'environ 200 grammes.

### 1-2 Retrait des films électrostatiques et contrôle des verres

Après 4 mois de stockage, tous les verres sont sortis des pochettes, et les films électrostatiques sont « décollés » manuellement en tirant sur la languette.

Les verres sont contrôlés sous lampe Waldmann. L'intégrité de la couche protectrice est contrôlée visuellement en réflexion.

Lorsque la couche protectrice est intacte, son reflet est de couleur bleue et uniforme sur toute la surface.

Lorsque la couche protectrice est dégradée, son reflet est non uniforme : les défauts sont de taille supérieure à 1mm de diamètre.

Les verres sont ensuite soumis à une opération de débordage.

On note si le débordage s'effectue correctement (aucune perte d'adhérence du patin de maintien).

| | Verre traité sans film électrostatique | Verre traité + film électrostatique |
|---|---|---|
| Contrôle visuel, en réflexion, sous lampe Waldmann | La couche protectrice temporaire est partiellement abîmée, voire totalement effacée au centre du verre. Il y a eu transfert de la couche protectrice temporaire dans le coussinet de la pochette | Après retrait du film, la couche protectrice temporaire est intacte (reflets bleus uniformes). |
| Adhérence du patin de maintien lors du débordage | Mauvaise adhérence du patin de maintien | Bonne adhérence du patin de maintien |

### Exemple 2

30 verres en polycarbonate, de puissance -2.00 dioptries, sont traités comme décrit dans le paragraphe 1-1 de l'exemple 1.

### 1-1 Pose des films électrostatiques et mise en pochette

15 verres sont mis en pochette sans aucune protection.

| | |
|---|---|
| Référence des verres | : polycarbonate, puissance -2.00 dioptries, diamètre 70 mm |
| Quantité | : 15 verres |
| Fournisseur des pochettes | : Schock / Papier Fabrik Lahnstein Schock |

Sur les 15 autres verres, on pose, manuellement, au centre de la surface convexe des verres un film électrostatique de diamètre 38 mm avec languette.

Les verres sont ensuite mis dans des pochettes.

| | |
|---|---|
| Référence des verres | : polycarbonate, puissance -2.00 dioptries, diamètre 70 mm |
| Quantité | : 15 verres |
| Fournisseur des films électrostatiques | : Société Séricom - Plastorex, fabricant JAC |
| Matière | : PVC. |
| Epaisseur du film | : 150 µm |

### 1-2 Test

Le test a pour objectif de simuler un transport dans des conditions extrêmes.

### Description du test :

Les verres, mis en pochette, sont placés sur un plateau, face convexe vers le bas. On fait alors faire rapidement (en 16 secondes) au plateau 40 aller-retour de gauche à droite sur une course de 10 cm.

### Retrait des films électrostatiques et contrôle des verres

Après le test, tous les verres sont sortis des pochettes.

Les films électrostatiques sont retirés manuellement en tirant sur la languette.

Les verres sont contrôlés sous lampe Waldmann.

Ils sont ensuite soumis à une opération de débordage.

| | Verre traité sans film électrostatique | Verre traité + film électrostatique |
|---|---|---|
| Contrôle visuel, en réflexion, sous Waldmann | La couche protectrice temporaire est fortement abîmée, surtout au centre convexe du verre, à cause du lampe frottement contre le coussinet de la pochette. Le reflet convexe n'est plus uniforme. | La couche protectrice temporaire est intacte (reflets bleus uniformes) |
| Résultat adhérence du patin de maintien lors du débordage | Mauvaise adhérence du patin de maintien | Bonne adhérence du patin de-maintien |

## Revendications

1. Lentille optique comportant un revêtement protecteur externe, temporaire, recourant au moins partiellement une surface de la lentille et comprenant au moins une couche extérieure dégradable mécaniquement par frottement et/ou contact, à l'exception d'une couche extérieure en oxyde métallique et/ou hydroxyde métallique directement en contact avec une couche sous-jacente contenant du fluorure de magnésium, le revêtement protecteur externe temporaire recouvrant la surface de ladite lentille optique de façon suffisante pour assurer l'adhésion de la lentille optique à un patin de maintien durant l'opération de débordage de celle-ci, **caractérisé en ce que** le revêtement protecteur externe, temporaire, est recouvert par un film pelable adhérant électrostatiquement à la couche extérieure.

2. Lentille selon la revendication 1, **caractérisée en ce que** la couche extérieure est en un matériau choisi parmi les fluorures métalliques et leurs mélanges, les oxydes métalliques et leurs mélanges, les hydroxydes métalliques et leurs mélanges, les mélanges de deux ou plus de ces fluorures, oxydes et hydroxydes métalliques, les encres de marquage des lentilles ophtalmiques et les résines constituant le liant de ces encres de marquage.

3. Lentille selon la revendication 2, **caractérisé en ce que** les fluorures métalliques sont choisis parmi MgF₂, LaF₃, AlF₃ et CeF₃, de préférence MgF₂, les oxydes métalliques sont choisis parmi MgO, CaO, TiO₂, Al₂O₃, ZrO₂ et Pr₂O₃, de préférence MgO, et les hydroxydes métalliques sont choisis parmi Mg(OH)₂, Ca(OH)₂ et Al(OH)₃, de préférence Mg(OH)₂.

4. Lentille selon la revendication 1, **caractérisée en ce que** la couche extérieure est en fluorure métallique, préférentiellement en MgF₂.

5. Lentille selon l'une quelconque des revendications précédentes, **caractérisée en ce que** le revêtement protecteur externe, temporaire est de nature minérale et a une épaisseur égale ou inférieure à 50 nm.

6. Lentille selon l'une quelconque des revendications précédentes, **caractérisée en ce que** la couche extérieure du revêtement protecteur externe, temporaire, a une énergie de surface d'au moins 15 mJ/m².

7. Lentille selon l'une quelconque des revendications précédentes, **caractérisée en ce que** le revêtement protecteur externe, temporaire, recouvre au moins 15 %, mieux au moins 20 %, encore mieux au moins 30 % et de préférence la totalité de la surface de la lentille.

8. Lentille selon l'une quelconque des revendications précédentes, **caractérisée en ce que** le revêtement protecteur externe, temporaire, est un revêtement multicouches.

9. Lentille selon l'une quelconque des revendications précédentes, **caractérisée en ce que** le revêtement protecteur externe, temporaire a été déposé en phase vapeur.

10. Lentille selon l'une quelconque des revendications précédentes, **caractérisée en ce que** le film pelable électrostatique est un film souple en matière plastique contenant au moins 20 % en poids d'au moins un plastifiant.

11. Lentille selon la revendication 10, **caractérisée en ce que** le film souple en matière plastique est un film de poly(chlorure de vinyle) (PVC) contenant au moins 30 % en poids, de préférence 30 à 60 % en poids, d'au moins un plastifiant.

12. Lentille selon l'une quelconque des revendications précédentes, **caractérisée en ce que** le film électrostatique a une épaisseur de 100 à 200 µm.

13. Lentille selon l'une quelconque des revendications précédentes, **caractérisée en ce que** le revêtement protecteur externe, temporaire, est formé sur un revêtement de surface hydrophobe et/ou oléophobe de la lentille.

14. Lentille selon la revendication 13, **caractérisée en ce que** le revêtement de surface hydrophobe et/ou oléophobe a une énergie de surface égale ou inférieure à 14 mJ/m², de préférence égale ou inférieure à 12 mJ/m².

15. Lentille selon la revendication 13 ou 14, **caractérisée en ce que** le revêtement de surface hydrophobe et/ou oléophobe a une épaisseur inférieure à 10 nm, de préférence inférieure à 5 nm.

16. Lentille selon l'une quelconque des revendications 13 à 15, **caractérisée en ce que** le revêtement de surface hydrophobe et/ou oléophobe est formé sur un revêtement anti-reflet de la lentille.

17. Lentille selon l'une quelconque des revendications précédentes, **caractérisée en ce que** ladite lentille optique est revêtue du revêtement protecteur externe temporaire de sorte qu'après retrait dudit film pelable, elle subit un désaxage de 2° ou moins lorsqu'elle est soumise à une opération de débordage.

18. Procédé de débordage d'une lentille optique comprenant les étapes suivantes :
- prendre une lentille optique selon l'une quelconque des revendications précédentes ;
- ôter le film pelable électrostatique pour mettre à nu !a couche extérieure mécaniquement dégradable ;
- disposer la lentille optique dans un dispositif de débordage comportant un patin de maintien de sorte que le patin de maintien adhère à la couche extérieure mécaniquement dégradable ;
- procéder au débordage de la lentille optique ;
- enlever le revêtement protecteur temporaire ; et
- récupérer la lentille optique finale débordée.

## Claims

1. An optical lens comprising a temporary outer protective coating covering at least partially a surface of the lens and comprising at least one outer layer capable to be mechanically altered through friction and/or contact, except for a metal oxide and/or metal hydroxide outer layer being directly in contact with an underlying layer containing magnesium fluoride, the temporary outer protective coating recovering the optical lens surface in a sufficient manner so as to ascertain adhesion of the optical lens to an holding pad during the edging step thereof, wherein the temporary outer protective coating is coated with a peelable film electrostatically adhering to the outer layer.

2. A lens according to claim 1, wherein the outer layer is made of a material chosen from metal fluorides and mixtures thereof, metal oxides and mixtures thereof, metal hydroxides and mixtures thereof, mixtures of two or more of such metal fluorides, oxides and hydroxides, marking inks for optical lenses and resins chosen from resins which may form the binding agent of such marking inks.

3. A lens according to claim 2, wherein the metal fluorides are chosen from MgF₂, LaF₃, AlF₃ and CeF₃, preferably MgF₂, the metal oxides are chosen from MgO, CaO, TiO₂, Al₂O₃, ZrO₂ and Pr₂O₃, preferably MgO, and the metal hydroxides are chosen from Mg(OH)₂, Ca(OH)₂ and Al(OH)₃, preferably Mg(OH)₂.

4. A lens according to claim 1, wherein the outer layer is made of a metal fluoride, preferably MgF₂.

5. A lens according to any one of the preceding claims wherein the temporary outer protective coating is mineral and has a thickness equal to or lower than 50 nm.

6. A lens according to any one of the preceding claims, wherein the outer layer of the temporary outer protective coating has a surface energy of at least 15 mJ/m².

7. A lens according to any one of the preceding claims, wherein the temporary outer protective coating covers at least 15%, more preferably at least 20%, much more preferably at least 30% and most preferably the whole surface of the lens.

8. A lens according to any one of the preceding claims, wherein the temporary outer protective coating is a multilayered coating.

9. A lens according to any one of the preceding claims, wherein the temporary outer protective coating has been deposited in vapour phase.

10. A lens according to any one of the preceding claims, wherein the electrostatic peelable film is a flexible film made of a plastic material containing at least 20% by weight of at least one plasticizer.

11. A lens according to claim 10, wherein the plastic material film contains at least 30% by weight, preferably 30 to 60% by weight of at least one plasticizer.

12. A lens according to any one of the preceding claims, wherein the electrostatic film has a thickness ranging from 100 to 200 µm.

13. A lens according to any one of the preceding claims, wherein the temporary outer protective coating is formed onto a lens hydrophobic and/or oleophobic surface coasting.

14. A lens according to claim 13, wherein the hydrophobic and/or oleophobic surface coating has a surface energy equal to or lower than 14 mJ/m², preferably equal to or lower than 12 mJ/m²,

15. A lens according to claim 13 or 14, wherein the hydrophobic and/or oleophobic surface coating has a thickness lower than 10 nm, preferably lower than 5 nm.

16. A lens according to any one of claims 13 to 15, wherein the hydrophobic and/or oleophobic surface coating is formed onto a lens antireflection coating.

17. A lens according to any one of the preceding claims, wherein the optical lens is coated with the temporary outer protective coating so that after withdrawal of the peelable film, the lens undergoes an axial offset of 2° or less when subjected to an edging operation.

18. A method for edging an optical lens, comprising the steps of:
- providing an optical lens according to any one of the preceding claims;
- removing the electrostatic peelable film in order to expose the mechanically alterable outer layer;
- placing the optical lens in a edging device comprising a holding pad, such that the holding pad adheres to the mechanically alterable outer layer;
- edging the optical lens;
- removing the temporary protective coating; and
- recovering the edged, final optical lens.

## Patentansprüche

1. Optische Linse mit einer externen, temporären, schützenden Beschichtung, die mindestens teilweise eine Oberfläche der Linse bedeckt und mindestens eine äußere, durch Reibung und/oder Berührung mechanisch abbaubare Schicht umfasst, mit Ausnahme einer äußeren Schicht aus Metalloxid und/oder Metallhydroxid direkt in Kontakt mit einer darunterliegenden Magnesiumfluorid-haltigen Schicht, wobei die externe, temporäre, schützende Beschichtung die Oberfläche der optischen Linse in ausreichender Weise bedeckt, um die Haftung der optischen Linse auf einem Haltefuß während des Vorgangs des Beschneidens der Kanten von dieser zu gewährleisten, **dadurch gekennzeichnet, dass** die externe, temporäre, schützende Beschichtung mit einem abziehbaren Film bedeckt ist/wird, der an der äußeren Schicht elektrostatisch haftet.

2. Linse nach Anspruch 1, **dadurch gekennzeichnet, dass** die äußere Schicht aus einem Material ist, ausgewählt unter den Metallfluoriden und ihren Mischungen, den Metalloxiden und ihren Mischungen, den Metallhydroxiden und ihren Mischungen, den Mischungen aus zwei oder mehr der Metallfluoride, -oxide und "hydroxide, den Markierungstinten für die ophthalmischen Linsen und den Harzen, die das Bindemittel dieser Markierungstinten bilden.

3. Linse nach Anspruch 2, **dadurch gekennzeichnet, dass** die Metallfluoride ausgewählt sind unter MgF₂, LaF₃, AlF₃ und CeF₃, vorzugsweise MgF₂, die Metalloxide ausgewählt sind unter MgO, CaO, TiO₂, Al₂O₃, ZrO₂ und Pr₂O₃, vorzugsweise MgO, und die Metallhydroxide ausgewählt sind unter Mg(OH)₂, Ca(OH)₂ und Al(OH)₃, vorzugsweise Mg(OH)₂.

4. Linse nach Anspruch 1, **dadurch gekennzeichnet, dass** die äußere Schicht aus Metallfluorid ist, vorzugsweise aus MgF₂.

5. Linse nach einem der vorhergehenden Ansprüche, **dadurch gekennzeichnet, dass** die externe, temporäre, schützende Beschichtung von mineralischer Art ist und eine Dicke gleich oder kleiner als 50 nm hat.

6. Linse nach einem der vorhergehenden Ansprüche, **dadurch gekennzeichnet, dass** die äußere Schicht der externen, temporären, schützenden Beschichtung eine Oberflächenenergie von mindestens 15 mJ/m² hat.

7. Linse nach einem der vorhergehenden Ansprüche, **dadurch gekennzeichnet, dass** die externe, temporäre, schützende Beschichtung mindestens 15 %, besser mindestens 20 %, noch besser mindestens 30 % und vorzugsweise die Gesamtheit der Oberfläche der Linse bedeckt.

8. Linse nach einem der vorhergehenden Ansprüche, **dadurch gekennzeichnet, dass** die externe, temporäre, schützende Beschichtung eine mehrlagigemehrlagige Beschichtung list

9. Linse nach einem der vorhergehenden Ansprüche, **dadurch gekennzeichnet, dass** die externe, temporäre, schützende Beschichtung durch Abscheiden aus der Dampfphase aufgebracht wird.

10. Linse nach einem der vorhergehenden Ansprüche, **dadurch gekennzeichnet, dass** der elektrostatische, abziehbare Film ein flexibler Film aus Kunststoff ist, der mindestens 20 Gewichtsprozent von mindestens einem Weichmacher enthält.

11. Linse nach Anspruch 10, **dadurch gekennzeichnet, dass** der flexible Film aus Kunststoff ein Film aus Polyvinylchlorid (PVC) ist, der mindestens 30 Gewichtsprozent, vorzugsweise 30 bis 60 Gewichtsprozent von mindestens einem Weichmacher enthält.

12. Linse nach einem der vorhergehenden Ansprüche, **dadurch gekennzeichnet, dass** der elektrostatische Film eine Dicke von 100 bis 200 µm hat.

13. Linse nach einem der vorhergehenden Ansprüche, **dadurch gekennzeichnet, dass** die externe, temporäre, schützende Beschichtung auf einer hydrophoben und/oder oleophoben Oberflächenbeschichtung der Linse gebildet wird.

14. Linse nach Anspruch 13, **dadurch gekennzeichnet dass** die hydrophobe und/oder oleophobe Oberflächenbeschichtung eine Oberflächenenergie gleich oder kleiner als 14 mJ/m² hat, vorzugsweise gleich oder kleiner als 12 mJ/m²,

15. Linse nach Anspruch 13 oder 14, **dadurch gekennzeichnet, dass** die hydrophobe und/oder oleophobe Oberflächenbeschichtung eine Dicke kleiner als 10 nm hat, vorzugsweise kleiner als 5 nm.

16. Linse nach einem der Ansprüche 13 bis 15, **dadurch gekennzeichnet, dass** die hydrophobe und/oder oleophobe Oberflächenbeschichtung auf einer Entspiegelungs- oder Anti-Reflex-Beschichtung der Linse gebildet wird.

17. Linse nach einem der vorhergehenden Ansprüche, **dadurch gekennzeichnet, dass** die optische Linse mit einer externen, temporären, schützenden Beschichtung beschichtet ist, so dass nach dem Abziehen des abziehbaren Films sie um 2° oder weniger versetzt ist/wird, wenn sie dem Vorgang des Beschneidens der Kanten unterworfen wird.

18. Verfahren des Beschneidens der Kanten einer optischen Linse umfassend die folgenden Schritte:
- Zur-Verfügung-Stellen einer optischen Linse nach einem der vorhergehenden Ansprüche;
- Entfernen des elektrostatischen, abziehbaren Films, um die äußere, mechanisch abbaubare Schicht freizulegen;
- Ausrichten der optischen Linse in einem Gerät des Beschneidens der Kanten mit einem Haltefuß, so dass der Haltefuß an der äußeren, mechanisch abbaubaren Schicht haftet;
- Durchführen des Beschneidens der Kanten der optischen Linse;
- Entfernen der temporären, schützenden Beschichtung; und
- Erlangen der fertig beschnittenen optischen Linse.
